# EUROPEAN PATENT APPLICATION

(11) **EP 0 528 052 A1**
(43) Date of publication of application: **24.02.1993**
(21) Application number: 92906227.1
(22) Date of filing: 03.03.1992
(51) Int. Cl.: B23P 23/02, B23Q 11/00, B23Q 1/02

(54) **MACHINE TOOL**

(30) Priority: 07.03.1991 JP 123303/91
(71) Applicant: KITAMURA MACHINERY CO., LTD., Takaoka-shi, Toyama-ken 939-11 (JP)
(72) Inventor: KITAMURA, Koichiro, Takaoka-shi, Toyama-ken 933 (JP)
(74) Representative: Patentanwälte Ruff, Beier, Schöndorf und Mütschele
(86) International application number: JP9200250
(87) International publication number: WO9215425

(57) **Abstract**

A machine tool comprising: a plurality of tool holders provided with tools; a first main shaft for holding the tool holders; a main shaft head for rotatably holding the first main shaft; a first drive means for rotating the first main shaft about the main shaft head; a first moving means for moving the main shaft head in a first direction being in parallel to the axial direction of the first main shaft; a second moving means for moving the main shaft head in a direction perpendicularly intersecting the first direction; a fixing means for detachably fixing a work; a second main shaft for holding the fixing means, disposed in a direction perpendicularly intersecting the first main shaft; a supporting portion for rotatably supporting the second main shaft; a base for supporting the supporting portion; an index means for indexing the second main shaft; a second drive means for continuously rotating the second main shaft; ad a third moving means for moving the supporting portion in a third direction perpendicularly intersecting both the first and the second directions.

## Description

### Technical Field

This invention relates to a machine tool.

### Background Art

A rod-like workpiece is, in a conventional manner, turned with a lathe thereafter milled with a milling machine.

Thus both a lathe and a milling machine are necessary for complicated machining. It costs a great deal and demands a large space to install both machines. On the other hand a workpiece has to be detached from the lathe and reset to the milling machine so that manufacturing cost is increased. On the other hand a great amount of chips have to be transferred during machining action from the machine tool to a storage member remote therefrom.

### Disclosure of Invention

An object of the invention is to provide a machine tool in which a complicated machining can be performed and a great amount of chips generated by cutting can be treated during machining operation.

According to this invention a machine tool comprises:
a plurality of toolholders each having a tool;
a first spindle for holding one of the toolholders;
a spindle head for rotatably supporting the first spindle;
a first drive means for rotating the first spindle relative to the spindle head;
a first transfer means for moving the spindle head in a first direction parallel to the axis of the first spindle;
a second transfer means for moving the spindle head in a second direction perpendicular to the first direction;
a hold means for detachably holding a workpiece;
a second spindle perpendicular to the first spindle for supporting the hold means;
a support member for rotatably supporting the second spindle;
a base for supporting the support member;
an index means for indexing the second spindle;
a second drive means for continuously rotating the second spindle; and
a third transfer means for moving the support member in a third direction perpendicular to the first and the second directions.

A machine tool according to this invention preferably further comprises a discharge means for continuously discharging chips during machining operation in case a workpiece is machined with a tool held on the first spindle.

The discharge means for chips is preferably constructed as a conveying means having an endless track.

### Description of Drawings

Fig. 1 is a perspective view showing a machine tool according to the invention.

Fig. 2 is a front view showing the machine tool according to the invention.

Fig. 3 is a side view showing discharge means for chips.

Fig. 4 is a view showing a turned workpiece.

Fig. 5 is a view showing a first spindle on which a drill is attached.

Fig. 6 is a view showing a workpiece machined with the drill.

Fig. 7 is a view showing a first spindle on which an end mill is attached.

Fig. 8 is a view showing a workpiece machined with the end mill.

Fig. 9 is a view showing another machine tool according to the invention.

### Best Mode for Carrying Out the Invention

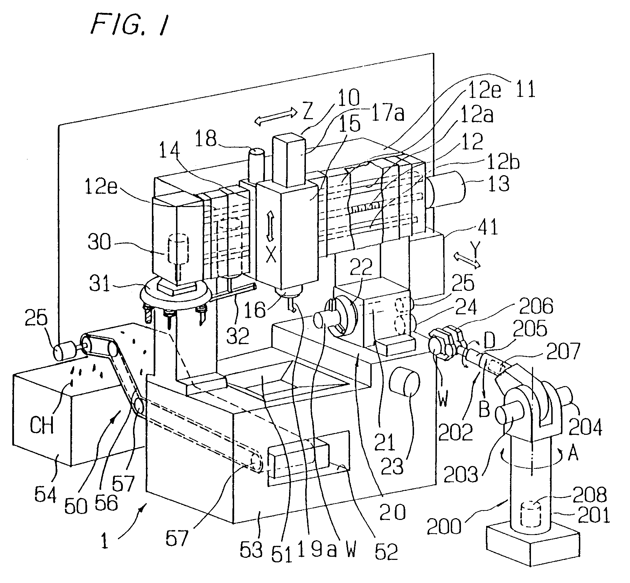

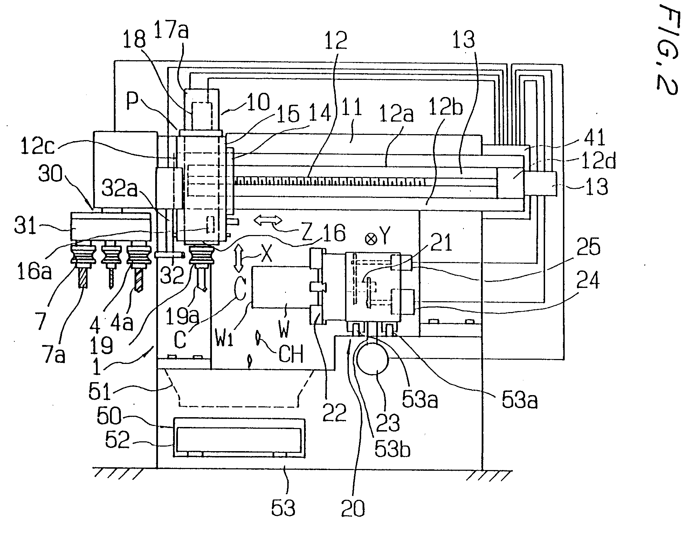

A machine tool 1 shown in Figs. 1 and 2 comprises a spindle head unit 10, a support base 20, an automatic tool changer 30, a CNC operating plate 41 and a discharge means 50 for chips.

Two horizontal rails 12a, 12b are formed on a frame 11. Between two mounting portions 12c, 12d a feed screw 12 is supported. The feed screw 12 is connected at its one end to an output shaft of a servomotor 13.

A plate 14 of the spindle head unit 10 is engaged with the feed screw 12. Therefore when the servomotor 13 is driven, the base 14 moves along the feed screw 12 in a direction Z from a position P (shown in Fig. 2). As shown in Fig. 1, a telescopic dust cover 12e is arranged over the rails 12a, 12b and the feed screw 12. This cover 12e is not shown in Fig. 2. The frame 11 is fixedly mounted on the base 53.

A spindle head 15 is attached on the plate 14. A spindle 16 is rotatably supported on the spindle head 15 and directed in a direction X. The spindle 16 can be continuously rotated by a motor 17a. The spindle head 15 can be moved (vertically) in the direction X by a servomotor 18.

At the lower end of the spindle 16 a toolholder 19 is detachably held. The toolholder 19 has, for example, a turning tool 19a attached thereto.

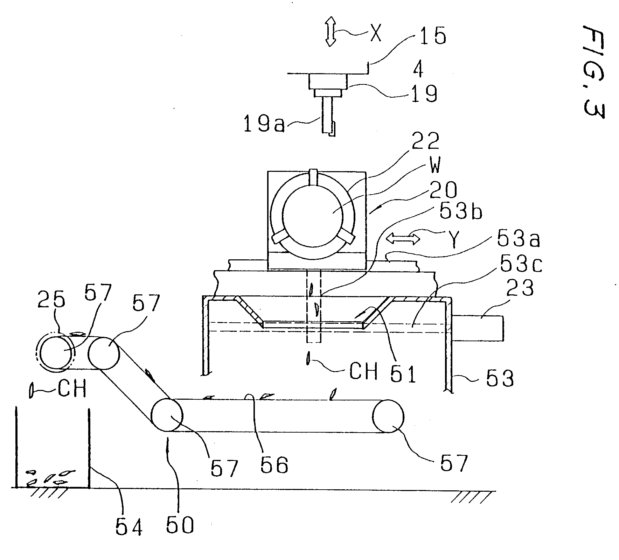

The support base 20, or spindle base, has a spindle 21. At one end of the spindle 21 a chuck 22 is detachably attached. The chuck 22 is to be operated, for example, by means of hydraulic pressure. The spindle 21 directs in a horizontal or Z direction. A workpiece W is held in the chuck. The workpiece in this embodiment has a cylindrical shape or rod shape. Two motors 25 and 24 are mounted on the support base 20. The motor 25 is to index the spindle 21 by predetermined angle. While the motor 24 is to continuously rotate the spindle 21. The support base 20 is mounted on a rail 53a formed on the base 53. As shown in Fig. 3 the support base 20 has a nut 53b fixed thereto and the nut 53b engages a feed screw 53c. The feed screw 53c is connected to an output shaft of a motor 23. The support base 20 can be slide in a direction Y by means of the motor 23. The direction Y is perpendicular to the direction X and the direction Z.

The automatic tool changer 30 shown in Fig. 2 is a conventional type and provided with a tool magazine 31 and a tool changing arm 32. The changer 30 operates for example in a following manner. The arm 32 grips by its fingers both a toolholder 4 stored in the tool magazine 31 and a toolholder 19 held in the spindle 16 simultaneously. And the arm 32 is moved downward so as to draw out both the toolholder 4, 19. Then the arm 32 is rotated about its axis 32a by 180 degrees. Thereafter the arm 32 is moved upward so that the toolholder 4 is inserted into the spindle while the toolholder 19 is returned to the predetermined position in the tool magazine 31.

The CNC device 41 controls the motor 17a, the servomotor 18, the servomotor 13, the index motor 25, the servomotor 23, the motors 24, 25, a lock device 16a for the spindle 16 and the automatic tool changer 30 and so on.

As shown in Figs. 1, 3 the discharge means 50 for chips is located between an opening 52 formed in the base 53 and a box 54. The box 54 is located behind the base 53 in order to receive chips CH generated in turning or drilling operation. The opening 52 is formed in the base 53 and extends from its front portion to its back portion. Above the opening 52 a receive member 51 is arranged. The discharge means 50 comprises a transfer member 56 formed as an endless belt and a motor for driving it. The transfer member 56 is supported by several rollers 57.

Now a turning operation, a drilling operation and a grooving operation in the machine tool 1 are explained. These operations are performed by means of commands from the CNC device 41.

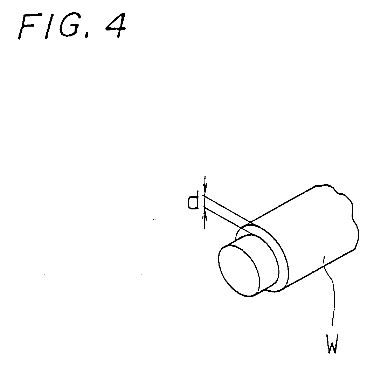

First a turning operation on a workpiece is explained with reference to Figs. 2 and 4.

The toolholder is set on the spindle 16. The lock device 16a locks the spindle 16 to prevent it from rotating relative to the spindle head 15. The motor 17a is not driven.

A workpiece W is held on the chuck 22 of the spindle 21. The spindle 21 is continuously rotated at high speed in a direction C by means of the motor 24. The motor 23 is driven so that the support base 20 is moved in a direction Y to a predetermined position thereafter the motor 23 is stopped.

While the servomotor 18 is driven so that the spindle head 15 and the turning tool 19a are moved downward in a direction X from a position P shown in Fig. 2 to a desired position.

The servomotor 13 is driven so that the spindle head 15 is moved (to the right) in a direction Z. Thus the workpiece W is turned, or its circumference is removed by a depth d as shown in Fig. 4.

When this cutting operation is finished the spindle head 15 is moved (upward) in the direction X and also (to the left) in the direction Z so as to be returned to the position P then the spindle 21 is stopped.

If necessary an end face W1 of the workpiece W can be cut with the turning tool 19a. This cutting can be performed in the same manner as before-said peripheral turning except that the turning tool 19a should face the end face W1.

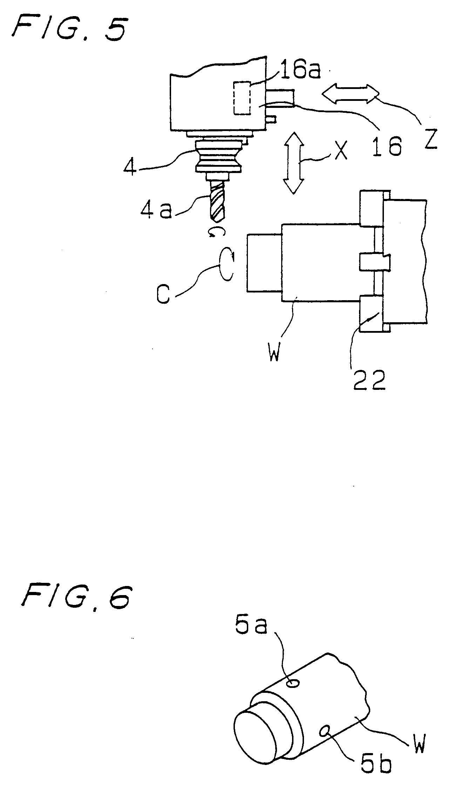

Next a drilling operation on the workpiece W is explained with reference to Figs. 5 and 6. The spindle 16 is unlocked by the lock device 16a to prepare for rotating operation. And the arm 32 shown in Fig. 2 is operated so as to change the toolholder 19 for the toolholder 4 stored in the tool magazine 31. Thus the toolholder 4 is attached at the lower end of the spindle 16 as shown in Fig. 5. The toolholder 4 has a drill 4a.

The support base 20 and the spindle are moved in the direction Y to a predetermined position. The spindle head 15 is moved (to the right) in the direction Z from the position P, and the drill 4a is rotated by the motor 17a. And the spindle head 15 is moved (downward) in the direction X so that a hole 5a is drilled on the workpiece W.

Then the spindle head 15 is moved (upward) in the direction X so that the drill 4a is returned from the workpiece W. Then the spindle 21 is indexed in the direction C by 90 degrees by means of the servomotor 25. Next the spindle head 15 is moved again downward in the direction X so that another hole 5b is drilled on the workpiece as shown in Fig. 6.

Then the spindle head 15 is moved (upward) in the direction X and also in the direction Z (to the left) to the position P. The motor 17a and consequently the drill 4a is stopped.

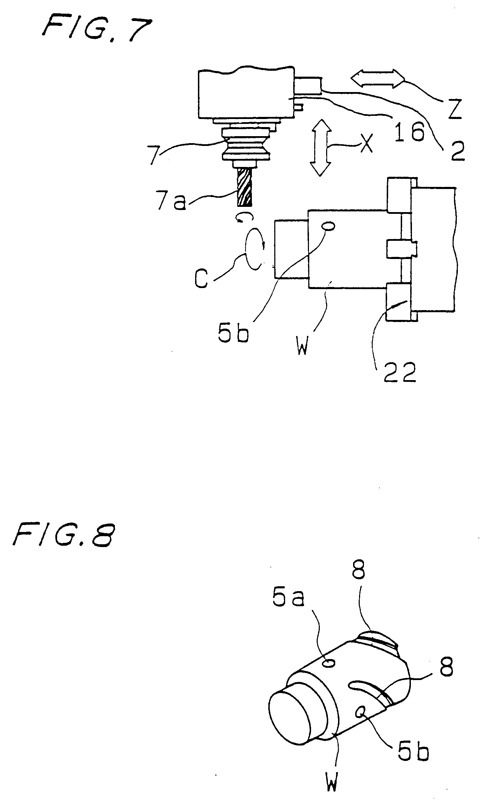

Next a channel shown in Fig. 8 will be formed on the workpiece W.

The index motor 25 is driven so that the workpiece W is indexed by 45 degrees in a counter direction C.

The arm 32 shown in Fig. 2 is operated so as to change the toolholder 4 for a toolholder 7. Thus the toolholder 7 is attached on the spindle 16 as shown in Fig. 7. The toolholder 7 has an end mill 7a.

The end mill 7a is rotated. The spindle head 15 is moved (to the right) in the direction Z. Thereafter it is moved downward in the direction X so that the end mill 7a starts to cut the workpiece W. The spindle head is continuously moved in the direction Z while the workpiece is rotated at low speed in the direction C. Therefore the end mill 7a cuts a spiral channel 8 on the circumference of the workpiece.

When this cutting operation is over the spindle head 15 is moved (upward) in the direction X and the end mill 7a is stopped. The spindle head 15 is moved (to the left) in the direction Z to the position P. Then the spindle 21 is stopped.

In the before-said manner a peripheral turning operation, a drilling or boring operation, and a grooving operation can be performed.

A robot 200 is illustrated in Fig. 1. The robot 200 is to supply a workpiece W to the chuck 22 and to remove it therefrom. An arm 202 is mounted on a base 201. The arm 202 can be swiveled in a direction B by a motor 203. The member 205 of the arm 202 can be rotated in a direction D by a motor 204. The member 205 is provided with fingers 206. The fingers 206 can be opened or closed by an actuator 207. The member 205 can be telescoped by the actuator 207. The base 201 is rotated in a direction A by a motor 208. A workpiece W can be attached on or detached from the chuck 22 by the fingers 206.

During said cutting operation the motor 25 is driven so that chips CH are continuously transferred from the base 53 to the box 54. Thus chips CH generated in the drilling, the turning and the grooving operation can by smoothly transferred during said cutting operations from the base 53 to the box 54. Therefore an operator does not have to observe chips CH so that he can keep his mind on cutting operations.

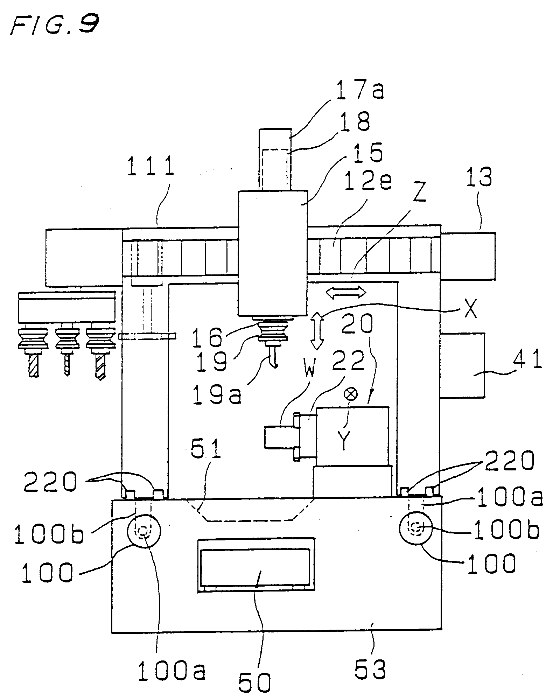

This invention is not restricted to the before-said embodiment. For example as shown in Fig. 9 a frame 111 can be constructed so as to be moved in a direction Y on the base 53 by means of motors 100, 100. In this case the support base may be fastened on the base 53 or constructed so as to move in the direction Y. The frame 111 can be moved in the direction Y along rails 220 by the motors 100. A feed screw 100b connected to the motor 100 engages a nut 100a fastened to the frame 111.

According to the invention, a tool can be moved in both a first and a second directions while a workpiece can be moved in a third direction perpendicular to the first and the second directions so that the workpiece can be machined in various cutting manners. Therefore a manufacturing cost can be decreased.

According to the invention, chips generated by cutting can be discharged during cutting operation. Thus chips do not accumulate during cutting operation so that cutting can be performed continuously for a long time.

According to the invention, a great amount of chips can be continuously discharged during cutting operation.

## Claims

1. A machine tool comprising:
a plurality of toolholders (4, 7, 19) each having a tool (4a, 7a, 19a);
a first spindle (16) for holding one of the toolholders (4, 7, 19);
a spindle head (15) for rotatably supporting the first spindle (16);
a first drive means (17a) for rotating the first spindle (16) relative to the spindle head (15);
a first transfer means (18) for moving the spindle head (15) in a first direction (X) parallel to the axis of the first spindle (16);
a second transfer means (12, 13, 12a, 12b) for moving the spindle head (15) in a second direction (Z) perpendicular to the first direction (X);
a hold means (22) for detachably holding a workpiece (W);
a second spindle (21) perpendicular to the first spindle (16) for supporting the hold means (22);
a support member (20) for rotatably supporting the second spindle (21);
a base (53) for supporting the support member (20);
an index means (25) for indexing the second spindle (21);
a second drive means (24) for continuously rotating the second spindle (21); and
a third transfer means (23, 53a, 53b, 53c) for moving the support member (20) in a third direction (Y) perpendicular to the first (X) and the second (Z) directions.

2. A machine tool according to claim 1, wherein the machine tool further comprises a discharge means (50) for continuously discharging chips (CH) during machining operation in case a workpiece (W) is machined with a tool (4a, 7a, 19a) held on the first spindle (16).

3. A machine tool according to claim 2, wherein the discharge means for chips (50) is constructed as a conveying means (56, 57) having an endless track.
